# EUROPÄISCHE PATENTANMELDUNG

(11) **EP 1 281 417 A1**
(43) Veröffentlichungstag der Anmeldung: **05.02.2003**
(21) Anmeldenummer: 01118299.5
(22) Anmeldetag: 31.07.2001
(51) Int. Cl.: A62C 2/06, F16L 5/04

(54) **Brandschutzmaterial für Bauzwecke**

(71) Anmelder: Niemann, Hans-Dieter, D-50169 Kerpen-Horrem (DE)
(72) Erfinder: Niemann, Hans Dieter, 50169 Kerpen (DE)
(74) Vertreter: Sternagel, Fleischer, Godemeyer & Partner Patentanwälte

(57) **Zusammenfassung**

Die Erfindung betrifft ein Brandschutzmaterial für Bauzwecke, das ein Trägermaterial und eine intumeszierende Subtanz enthält, und das sich dadurch auszeichnet, dass das Trägermaterial zwei oder mehrere miteinander verbundene, abgeschlossene Hohlräume bildet, die mit der intumeszierenden Substanz gefüllt sind. Dadurch wird gewährleistet, dass das zur Abschottung benötigte intumeszierende Material gezielt an der erforderlichen Stelle vorliegt, sich sowohl spezifischen Formen anpassen als auch Hohlräume möglichst vollständig füllen kann und im Hinblick auf Form, Größe und Volumen variabel ist.

## Beschreibung

Die vorliegende Erfindung betrifft ein Brandschutzmaterial für Bauzwecke, das ein Trägermaterial und eine intumeszierende Substanz enthält.

Um im Falle eines Brandes zu verhindern, dass sich Feuer oder Rauch in andere Teile eines Gebäudes ausbreiten, ist es heutzutage gesetzlich vorgeschrieben, insbesondere in verbindenden Bereichen wie Kabelschächten oder Rohrdurchführungen, Brandschutzabschottungen zu integrieren.

Aus der Praxis sind sowohl vielseitig anwendbare Brandschutzmaterialien wie Steine, Kissen, Kitte oder auch Flammschutzbahnen bekannt als auch spezifische Brandschutzvorrichtungen wie zum Beispiel entsprechend DE 198 42 100 A1 Rohrabschottungen, die an eine Gebäudewand oder -decke angebracht werden.

Bei den meisten der bisher beschriebenen Materialien oder Vorrichtungen kommt der eigentliche Brandschutz zustande durch die Verwendung intumeszierender Substanzen, die im Falle eines Brandes ab einer bestimmten Temperatur beginnen aufzuschäumen. Eine ursprünglich offene Verbindungsstelle beispielsweise zwischen zwei Räumen wird auf diese Weise verschlossen und eine weitere Ausbreitung von Feuer und Rauch verhindert.

Während Brandschutzsteine in der Lage sind, auch verhältnismäßig große Volumina einigermaßen stabil auszufüllen, so treten bei deren Verwendung Probleme auf, wenn spezifische Formen vorliegen, da die Steine von unflexibler Konsistenz sind. Die einzige Möglichkeit der Anpassung ist im Ausschneiden der benötigten Formung zu sehen. Dies kann je nach Form jedoch mit einem erheblichen Aufwand verbunden sein. Im Gegensatz dazu zeichnen sich Brandschutzkissen durch ihre Bauweise dadurch aus, dass sie sich teilweise an spezifischere Formungen anpassen, obwohl sie im Hinblick auf ihre Konsistenz auch nur geringe Flexibilität aufweisen. Da die einzelnen Kissen zur Fixierung nur schwer miteinander verbunden werden können, tritt jedoch bei einer Füllung von Hohlräumen größerer Ausdehnung durch Stapelung der Brandschutzkissen eine gewisse Instabilität auf.

Hinzu kommt, dass die Verteilung des intumeszierenden Materials innerhalb der Kissenhülle willkürlich ist. Ein beispielsweise durch andere aufliegende Kissen ausgeübter Druck oder ein unebener Untergrund kann so zu einer ungleichmäßigen Verteilung des Materials innerhalb des Kissens führen. Dies hat zur Folge, dass im Brandfall nicht gewährleistet ist, dass eine ausreichende Menge des aufgeschäumten Materials vorliegt, um die zu schützende Öffnung vollständig abzudichten.

DE 197 25 301 A1 beschreibt als Brandschutzmaterial eine Flammschutzbahn, die aus einem faserigen, flächigen Trägermaterial mit einer aufgebrachten Schicht eines intumeszierenden Materials besteht. Eine flexible Netzstruktur des Trägermaterials erzielt gewisse Biege- und Zugeigenschaften, die eine Anwendung auch bei gekrümmten Flächen, in Hohl- und Zwischenräumen möglich macht. Um eine derartige Flexibilität gewährleisten zu können ist die Schichtdicke des intumeszierenden Materials jedoch begrenzt auf max. 1 mm. Dies hat zur Folge, dass zur Füllung von Hohlräumen durch Faltung oder Verknüllen der Flammschutzbahn zwar ein gewisses Volumen erhalten wird, aber nicht gewährleistet ist, dass der Hohlraum tatsächlich vollständig mit dem Brandschutzmaterial gefüllt ist. Analog zu den herkömmlichen Brandschutzkissen kann auch hier die zur Abdichtung der Öffnung benötigte Menge an intumeszierendem Material gegebenenfalls nicht ausreichen. Im Falle einer Faltung der Flammschutzbahn zur Füllung von größeren Volumina ist zudem eine Beweglichkeit der Schichten durch mangelnde Fixierung untereinander denkbar, die zu einer Instabilität führt.

Sowohl Brandschutzkissen als auch Flammschutzbahnen enthalten zudem Glasfasern als Bestandteile. Obwohl deren Verwendung gesetzlich bisher noch nicht verboten ist, ist in nächster Zukunft mit einer derartigen Einschränkung zu rechnen. Faserfreie Materialien sind auf jeden Fall auch jetzt schon zu bevorzugen.

Der vorliegenden Erfindung liegt daher die Aufgabe zugrunde, ein Brandschutzmaterial bereitzustellen, das in der Lage ist, sich sowohl spezifischen Formen anzupassen als auch größere Hohlräume möglichst vollständig zu füllen, das also im Hinblick auf Form, Größe und Volumen variabel sein sollte, vorzugsweise ohne Verwendung faseriger Materialien. Gleichzeitig sollte gewährleistet sein, dass die zur Abschottung benötigte Menge des intumeszierenden Materials gezielt an der zu verschließenden Stelle vorliegt.

Die Aufgabe wird erfindungsgemäß gelöst durch ein Brandschutzmaterial für Bauzwecke, das mindestens ein Trägermaterial und eine intumeszierende Substanz enthält und sich dadurch auszeichnet, dass das Trägermaterial zwei oder mehrere miteinander verbundene, abgeschlossene Hohlräume bildet, die mit einer intumeszierenden Substanz gefüllt sind.

Durch die Aufteilung des intumeszierenden Materials innerhalb des Trägermaterials in einzelne kleine, für sich abgeschlossene Volumina ist es möglich, eine definierte Menge des Blähmaterials genau an die Stelle zu bringen, die im Brandfall verschlossen werden muss. Dadurch wird gewährleistet, dass die im Brandfall benötigte Menge des intumeszierenden Materials an der zu verschließenden Stelle auch tatsächlich vorliegt, und so eine vollständige Abschottung und damit auch ein optimaler Brandschutz erfolgt.

In einer bevorzugten Ausführungsform handelt es sich um ein faserfreies Brandschutzmaterial. Als Trägermaterialien werden vorzugsweise, jedoch nicht ausschließlich, bekannte Polymerfolien, wie beispielsweise PE- oder PP-Folien, eingesetzt. Die Verwendung solcher per se schon formbaren Folien bewirkt eine völlige Flexibilität im Hinblick auf die räumliche Anordnung der miteinander verbundenen Hohlräume.

Die Fixierung des Brandschutzmaterials kann durch bekannte Maßnahmen wie beispielsweise kleben, klammern, mit Krampen festschießen oder umwickeln erfolgen. Nach der Umwicklung zum Beispiel eines Rohres kann eine zusätzliche Befestigung mit Hilfe von Klebeband oder Manschetten bewirkt werden. Auch eine Stapelung zur Füllung größerer Hohlräume ist möglich. Da die Oberfläche des beschriebenen Brandschutzmaterials nicht eben ist, sondern regelmäßig verteilte Erhebungen und Vertiefungen aufweist, weist eine räumlich versetzte Stapelung im Vergleich zu den herkömmlichen Brandschutzkissen eine größere Stabilität auf.

In bevorzugter Weise sind die vom Trägermaterial gebildeten Hohlräume in einer kettenförmigen, ringförmigen, flächenförmigen oder raumförmigen Struktur angeordnet.

Auf diese Weise ist es möglich, sowohl schmale Hohlräume beispielsweise mit dem kettenförmigen Material als auch großflächigere Hohlräume mit dem flächenförmigen Material sowie große Hohlraumvolumina durch eine räumliche Anordnung des Brandschutzmaterials vollständig auszufüllen.
Zur Vereinfachung der Lagerung und der Anbringung ist es insbesondere bei großem Bedarf denkbar, das ketten- und flächenförmige Brandschutzmaterial auf Rollen zur Verfügung zu stellen.

In einer besonders vorteilhaften Ausgestaltung des Brandschutzmaterials weisen die Hohlräume einen Querschnitt auf, der sämtliche denkbaren Formen wie oval, linsenförmig, rund, halbkreisförmig, tunnelförmig, drei-, vier- oder vieleckig oder auch Kombinationen davon bilden kann. Die Größe der einzelnen Querschnitte ist dabei ebenso variabel, wie die räumliche Ausdehnung des einzelnen Hohlraumes. Im Gegensatz zu den Flammschutzbahnen, die aufgrund einer maximalen Schichtdicke des intumeszierenden Materials von 1 mm meist mehrfach umwickelt oder gefaltet werden müssen, ist es daher möglich auch mit einer einzigen Lage des erfindungsgemäßen Brandschutzmaterials größere Hohlräume zu füllen. Darüber hinaus besteht auch hier die Möglichkeit einer Faltung, die die Volumenvariabilität noch zusätzlich steigert. Es sind daher die verschiedensten Volumina der Trägermaterial-Hohlräume denkbar, je nach den Anforderungen des Bauteiles. In Abhängigkeit der vorgegebenen baulichen Beschaffenheit der zu schützenden Elemente kann die Form des Brandschutzmaterials dadurch fast passgenau ausgewählt werden. Gleichzeitig erfolgt jedoch keine Beschränkung des Einsatzes auf dieses eine Bauelement, so dass überschüssiges Material auch für andere Bereiche zu verwenden ist, die keine derartige Passgenauigkeit erfordern.

Die einzelnen Hohlräume des Brandschutzmaterials werden vorzugsweise über Stege, Flächen oder perforierte Flächen des Trägermaterials oder durch Kombinationen dieser Verbindungsvarianten aneinander gefügt.

Dies hat den besonderen Vorteil, dass die Größe des Brandschutzmaterials nicht festgelegt ist, sondern ohne Aufwand individuell auf die zu schützenden Bauteile zurechtgeschnitten werden kann. Bei den herkömmlichen Brandschutzkissen hat man die Möglichkeit, um beispielsweise größere Flächen mit einem Brandschutz zu versehen, mehrere Kissen nebeneinander oder übereinander zu legen. Es ist dagegen jedoch nicht möglich die Größe des angebotenen Kissens zu reduzieren, da ein Aufschneiden oder Zerteilen eine ausreichende Funktionalität nicht mehr gewährleistet.

In einer weiteren bevorzugten Ausführungsform besitzt das intumeszierende Material eine granulatförmige Konsistenz. Durch die Variabilität des Anteils an Füllmaterial pro Hohlraum kann je nach den Anforderungen der mit der intumeszierenden Substanz gefüllte Hohlraum des Trägermaterials eine Verformbarkeit aufweisen oder verhältnismäßig starr sein. Dies ist im Vergleich zu den anderen gängigen Brandschutzmaterialien insofern von Vorteil als es auch hier den Erfordernissen der zu schützenden Bauelemente relativ exakt angepasst werden kann. So ist eine Kombination aus unterschiedlichen Verformbarkeiten von verbindendem und gefülltem Trägermaterial vorstellbar. Bei den Brandschutzkissen und - steinen ist die Konsistenz vorgegeben und einheitlich, während bei den Flammschutzbahnen nur eine geringfügige Variation der Konsistenz in Abhängigkeit von der Maschengröße des Glasfaservlieses realisierbar ist. Um eine Raumerfüllung zu ermöglichen, die über Faltung oder Verknüllen erfolgt, muss jedoch eine bestimmte Flexibilität der Flammschutzbahnen gewährleistet sein, da das Material ansonsten bei Verformung brechen würde. Starre Flammschutzbahnen sind daher nicht zur Ausfüllung größerer Hohlräume geeignet. Die einzelne Flammschutzbahn an sich ist ebenfalls von einheitlicher Festigkeit.

Die Herstellung des beschriebenen Brandschutzmaterials kann beispielsweise durch ein Verfahren erfolgen, das folgende Schritte beinhaltet, ohne sich jedoch auf dieses zu beschränken:
a) Das Trägermaterial wird mit Hohlräumen versehen,
b) die Hohlräume werden mit intumeszierender Substanz gefüllt,
c) die gefüllten Hohlräume werden mit Trägermaterial verschlossen.

Die Ausbildung der Hohlräume in der Trägerfolie kann beispielsweise, aber nicht ausschließlich, derart erfolgen, dass die Folie auf eine großflächige Formvorlage aufgebracht wird, die eine Anordnung einer Vielzahl gleichartiger oder unterschiedlicher Vertiefungen der gewünschten Form aufweist.

Die Anwendungsmöglichkeiten des erfindungsgemäßen Brandschutzmaterials werden durch die nachfolgenden Beispiele verdeutlicht, ohne jedoch auf diese beschränkt zu sein.

Bei Verwendung des erfindungsgemäßen Materials zum Schutz von nichtbrennbaren Rohren kann beispielsweise das Rohr mit der flächenförmigen Ausführungsform umwickelt werden, je nach Bedarf mit anschließender Fixierung durch Klebeband oder Manschetten. Daneben besteht aber auch die Möglichkeit Ringe zu bilden, deren innerer Durchmesser dem äußeren Rohrdurchmesser entspricht, und diese über das Rohr zu stülpen.

Ein weiterer Anwendungsbereich des erfindungsgemäßen Brandschutzmaterials betrifft den Schutz von brennbaren Rohren. In diesem Fall muss mit Hilfe des Brandschutzmaterials die durch das Wegbrennen des Rohres zurückbleibende Öffnung derart verschlossen werden, dass sowohl Feuer als auch Rauch der Durchtritt verwehrt wird. Dies kann man dadurch realisieren, dass das brennbare Rohr teilweise als zusätzliche Umhüllung ein Metallgehäuse erhält, wobei der Zwischenraum zwischen Gehäuse und Rohr mit dem Brandschutzmaterial gefüllt wird. Diese Anordnung bewirkt, dass eine gezielte Lenkung des Aufschäumens des Brandschutzmaterials in die Richtung der zu schließenden Öffnung erfolgt.

Die beschriebene Erfindung kann zudem bei der Abschottung von Kabelbündeln, Kabeltrassen oder Stromschienen zur Anwendung kommen. Der Schutz kann dabei sowohl durch Umwickeln der einzelnen Kabel oder des gesamten Bündels als auch durch stapelweises Überschichten erzielt werden, je nach Anzahl, Anordnung und Lage der zu schützenden Teile.

Auch zur Abdichtung von Hohlräumen wie Zwischenräumen von Fenster- oder Türelementen, Fugen oder Kanälen ist das vorliegende erfindungsgemäße Brandschutzmaterial geeignet. Es kann entweder in der ursprünglichen Form oder mit zusätzlicher Ummantelung jedweder Form in die Hohlräume eingebracht werden. Die Umhüllung bietet besonders im Falle von Fugen- und Fenster- bzw. Türabschottungen einen zusätzlichen Schutz gegen Beschädigungen des Trägermaterials durch teilweise scharfkantige Mauerbestandteile.

Als weiteres Anwendungsgebiet ist die Umkleidung von Heizungsrohren denkbar. So bewirkt die Verwendung eines Rohres beispielsweise aus PE-Schaum mit variabler Wanddicke als zusätzliche Umhüllung des beschriebenen Brandschutzmateriales neben einer Fixierung des Brandschutzmaterials überdies eine Isolation des Heizungsrohres.

Die nachfolgenden Ausführungsbeispiele sollen das erfindungsgemäße Brandschutzmaterial näher erläutern, ohne es jedoch auf bestimmte Ausführungsformen zu beschränken:

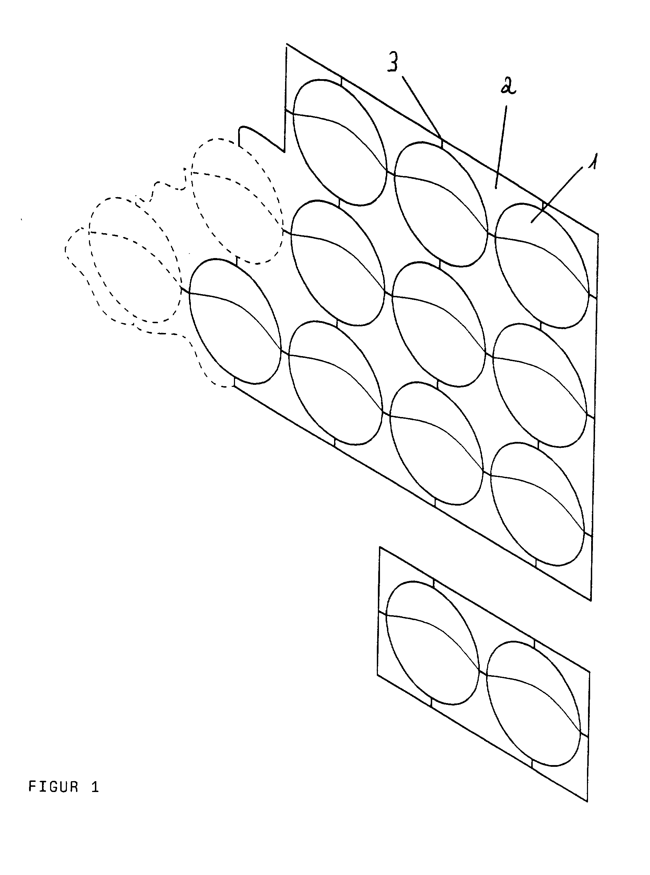

**Figur** 1 zeigt in schematischer Darstellung eine Aufsicht auf je ein flächenund kettenförmiges Ausführungsbeispiel des erfindungsgemäßen Brandschutzmaterials, bei dem der Hohlraum **1** einen runden Querschnitt aufweist, und die einzelnen Hohlräume über Flächen **2** von Trägermaterial, teilweise perforiert (**3**), miteinander verbunden sind.

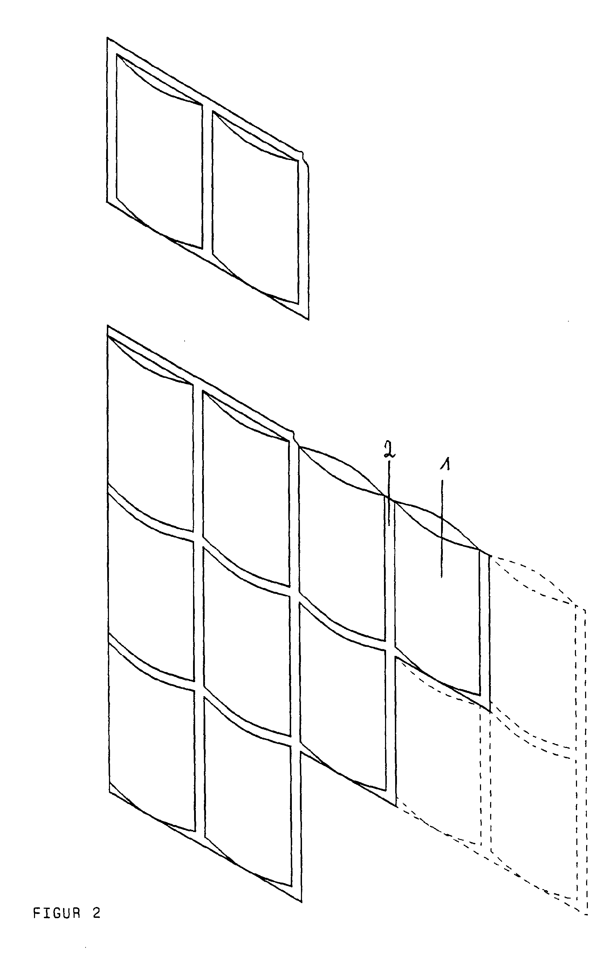

**Figur** 2 zeigt in schematischer Darstellung eine Aufsicht auf je ein flächenund kettenförmiges Ausführungsbeispiel des erfindungsgemäßen Brandschutzmaterials, bei dem der Hohlraum **1** einen viereckigen Querschnitt aufweist, und die einzelnen Hohlräume über Flächen **2** von Trägermaterial miteinander verbunden sind.

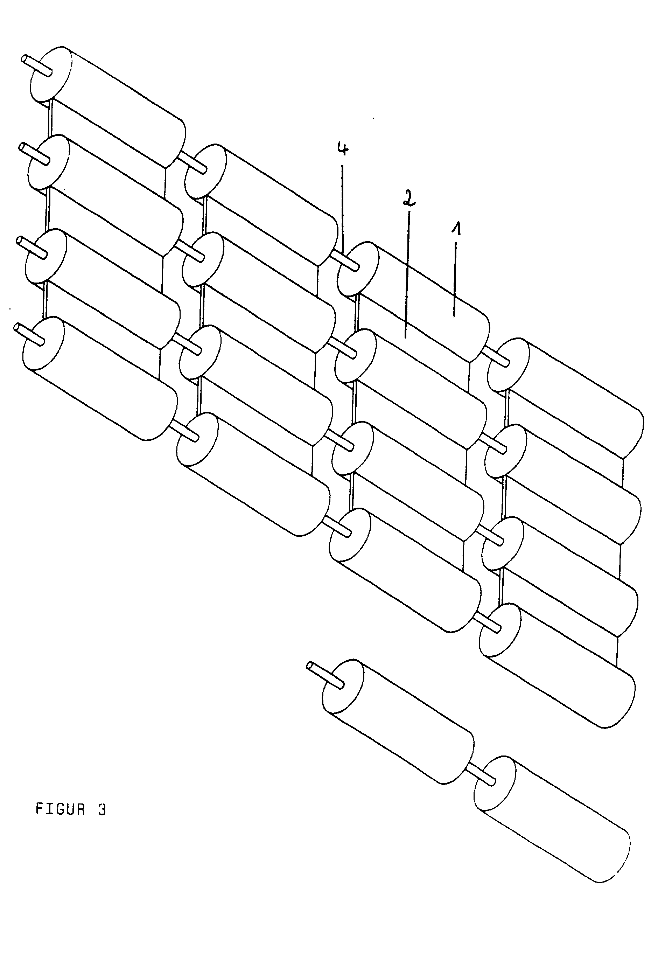

**Figur** 3 zeigt in schematischer Darstellung eine Aufsicht auf ein flächenund kettenförmiges Ausführungsbeispiel des erfindungsgemäßen Brandschutzmaterials, bei dem der Hohlraum **1** zylindrisch gestaltet ist, und die einzelnen Hohlräume sowohl über Flächen **2** als auch über Stege **4** von Trägermaterial miteinander verbunden sind.

### Bezugszeichenliste

- **1**: mit intumeszierender Substanz befüllter Hohlraum
- **2**: Verbindungsfläche aus Trägermaterial
- **3**: Perforationslinie der Verbindungsfläche aus Trägermaterial
- **4**: Verbindungssteg aus Trägermaterial

## Patentansprüche

1. Brandschutzmaterial für Bauzwecke enthaltend ein Trägermaterial und eine intumeszierende Substanz, **dadurch gekennzeichnet, dass** das Trägermaterial zwei oder mehrere miteinander verbundene, abgeschlossene Hohlräume bildet, die mit einer intumeszierenden Substanz gefüllt sind.

2. Brandschutzmaterial nach Anspruch 1, **dadurch gekennzeichnet, dass** es faserfrei ist.

3. Brandschutzmaterial nach Anspruch 1 oder Anspruch 2, **dadurch gekennzeichnet, dass** die vom Trägermaterial gebildeten Hohlräume in einer kettenförmigen, flächenförmigen oder raumförmigen Struktur angeordnet sind.

4. Brandschutzmaterial nach den Ansprüchen 1 bis 3, **dadurch gekennzeichnet, dass** die Hohlräume einen Querschnitt aufweisen, der oval, linsenförmig, rund, halbkreisförmig, tunnelförmig, dreieckig, viereckig oder vieleckig ist, oder eine Kombination dieser Querschnitte.

5. Brandschutzmaterial nach den Ansprüchen 1 bis 4, **dadurch gekennzeichnet, dass** die Hohlräume über Stege, Flächen oder perforierte Flächen von Trägermaterial oder Kombinationen derselben verbunden sind.

6. Brandschutzmaterial nach den Ansprüchen 1 bis 5, **dadurch gekennzeichnet, dass** die intumeszierende Substanz granulatförmig ist.

7. Verwendung des Brandschutzmaterials nach den Ansprüchen 1 bis 6 zur Umwicklung nichtbrennbarer Rohre, zur Befüllung eines ein brennbares Rohr zumindest teilweise enthaltendes Metallgehäuses, zur Abschottung von mindestens einem Kabelbündel, zur Abschottung mindestens einer Kabeltrasse, zur Abschottung mindestens einer Stromschiene, zur Befüllung einer Brandschutzfuge oder zur Abdichtung der Hohlräume bei Fensteroder Türelementen.
